# EUROPÄISCHE PATENTSCHRIFT

(11) **EP 3 482 643 B1**
(45) Veröffentlichungstag und Bekanntmachung des Hinweises auf die Patenterteilung: **01.01.2020**
(21) Anmeldenummer: 17200609.0
(22) Anmeldetag: 08.11.2017
(51) Int. Cl.: A24F 1/30, A24F 1/32, C09D 5/03, C09D 5/00, C08K 3/36, C09D 7/40

(54) **WASSERPFEIFE MIT BESCHICHTUNG**
WATER PIPE WITH COATING
PIPE À EAU AVEC REVÊTEMENT

(43) Veröffentlichungstag der Anmeldung: 15.05.2019
(73) Patentinhaber: Adler, Christoph, 45329 Essen (DE); Kohlwey, Lukas Ulrich, 45133 Essen (DE)
(72) Erfinder: Adler, Christoph, 45329 Essen (DE); Kohlwey, Lukas Ulrich, 45133 Essen (DE)
(74) Vertreter: Von Rohr Patentanwälte Partnerschaft mbB

(56) Entgegenhaltungen:
- EP-B1- 1 259 572
- CN-U- 205 358 205
- DE-U1-202011 100 245
- DE-U1-202016 003 909

## Beschreibung

Die vorliegende Erfindung betrifft eine Wasserpfeife zum Rauchen von Tabak, eine Rauchsäule für eine Wasserpfeife zum Rauchen von Tabak sowie die Verwendung einer Beschichtung in einem Rauchweg einer Wasserpfeife zum Rauchen von Tabak.

Wasserpfeifen sind Vorrichtungen zum Rauchen von Tabak. Der beim Rauchen mit einer Wasserpfeife verwendete Tabak weist üblicherweise einen hohen Feuchtigkeitsanteil auf und ist meist aromatisiert.

Zum Rauchen wird der Tabak auf einem Kopf der Wasserpfeife platziert, wobei der Kopf über eine Rauchsäule mit einem unten an der Wasserpfeife angeordneten Behälter durch Durchbrechungen fluidisch verbunden ist und somit einen Einlass der Wasserpfeife für den Rauch bildet. Zum Rauchen wird der Tabak mit einer auf dem Tabak bzw. oberhalb des Tabaks angeordneten Kohle erhitzt. Der Behälter wird so weit mit Wasser oder einer anderen Flüssigkeit gefüllt, dass das untere Ende bzw. eine untere Öffnung der Rauchsäule sich unterhalb der Flüssigkeitsoberfläche befindet. Oberhalb der Flüssigkeitsoberfläche ist ein Auslass zur Abgabe des Rauchs angeordnet. Beim Rauchen wird durch Saugen an dem Auslass bzw. einem an dem Auslass angeordneten Schlauch ein Unterdruck in dem Behälter erzeugt, der dazu führt, dass Luft von dem Kopf der Wasserpfeife durch die Rauchsäule in den Behälter gesaugt wird. Durch den Luftzug erhitzt sich die Kohle temporär stark, so dass im Tabak Rauch erzeugt wird, der durch die Rauchsäule in die Flüssigkeit bzw. den Behälter und von dort schließlich in den Mundraum des Benutzers gelangt.

Beim Rauchen kommt es zu einer Verschmutzung der Rauchsäule durch den durch die Rauchsäule hindurch geleiteten Rauch und durch Bestandteile des Tabaks, die beim Rauchen ebenfalls in die Rauchsäule gelangen können. Der beim Rauchen mit einer Wasserpfeife verwendete Tabak weist häufig einen hohen Feuchtigkeitsgehalt von beispielsweise zwischen 20 % und 40 % auf. Dieser Feuchtigkeitsgehalt wird durch ein Feuchthaltemittel, die sog. Molasse, erreicht, die dem Tabak zugegeben ist oder wird. Beim Rauchen kommt es daher insbesondere auch zu einer Ablagerung von Molasse in der Rauchsäule.

Außer der Rauchsäule können beim Rauchen auch andere Teile der Wasserpfeife verschmutzt werden, die beim Rauchen mit dem Rauch, Tabakbestandteilen und/oder der Molasse in Berührung kommen, beispielsweise der Behälter, der Schlauch und das Mundstück.

Die beim Rauchen entstehende Verschmutzung von Teilen der Wasserpfeife ist unansehnlich, kann den Geschmack des Rauchs verändern bzw. verschlechtern und kann aus hygienischer Sicht bedenklich oder sogar gesundheitsgefährdend sein. Daher ist, vorzugsweise nach jeder Benutzung, eine Reinigung der Wasserpfeife bzw. eine Entfernung der Verschmutzungen erforderlich. Dies gilt aus hygienischen Gründen insbesondere bei der gewerblichen Verwendung von Wasserpfeifen, beispielsweise in Shisha-Bars.

Die Reinigung der Wasserpfeife ist bei bekannten Wasserpfeifen recht aufwendig, umständlich, schwierig und/oder zeitintensiv, insbesondere die (mechanische) Reinigung der häufig mehrere 10 cm bis zu etwa 1 m langen Rauchsäule mit speziellen Bürsten o. dgl.

DE 20 2011 100245 U1 beschreibt eine Wasserpfeife eine Rauchsäule und eine Verwendung mit den im Oberbegriff der Ansprüche 1, 6 und 9 genannten Merkmalen. Weitere Wasserpfeifen mit Beschichtungen sind aus DE 202016 003909 U1 und CN 205 358 205U bekannt. Ein Schmutz- und Wasserabweisendes Beschichtungsmaterial ist aus EP 1 259 572 B1 bekannt.

Eine Aufgabe der vorliegenden Erfindung ist es daher, eine Lösung anzugeben, die das Reinigen einer Wasserpfeife, insbesondere eines Rauchwegs und/oder einer Rauchsäule der Wasserpfeife, erleichtert.

Die obige Aufgabe wird durch eine Wasserpfeife gemäß Anspruch 1, eine Rauchsäule gemäß Anspruch 6 oder eine Verwendung einer Beschichtung gemäß Anspruch 8 gelöst. Vorteilhafte Weiterbildungen sind Gegenstand der Unteransprüche.

Die erfindungsgemäße Wasserpfeife weist eine Rauchsäule als Teil eines Rauchwegs der Wasserpfeife auf. Die Rauchsäule besteht aus Edelstahl und weist zumindest abschnittsweise eine schmutzabweisende Beschichtung auf. Die Beschichtung weist Nanopartikel auf und hat eine auf dem Lotoseffekt basierende Antihaftwirkung.

So kann auf besonders einfache, effektive und effiziente Weise eine schmutzabweisende Beschichtung realisiert werden.

Die Erfindung bezieht sich auch auf eine Rauchsäule an sich, und zwar eine Rauchsäule für eine Wasserpfeife zum Rauchen von Tabak. Die Rauchsäule besteht aus Edelstahl und weist innenseitig eine schmutzabweisende Beschichtung mit Nanopartikeln und mit einer auf dem Lotoseffekt basierenden Antihaftwirkung auf.

Die nachfolgend erläuterten Merkmale, Aspekte und Vorteile der Beschichtungen beziehen sich jeweils sowohl auf die Wasserpfeife als auch auf die Rauchsäule, die aber auch unabhängig von einer Wasserpfeife realisierbar ist.

Insbesondere wird durch die schmutzabweisende Beschichtung ein Anlagern oder Anhaften von Schmutz vermieden oder verringert. Insbesondere wird also die Kraft, mit der der Schmutz anhaftet bzw. die zum Lösen oder Entfernen des Schmutzes benötigt wird, durch die Beschichtung verringert, so dass ein Lösen des Schmutzes bzw. Reinigen des Rauchwegs erleichtert ist. Alternativ oder zusätzlich ist durch die Beschichtung auch die Menge des Schmutzes, der sich in dem Rauchweg anlagert, verringert.

Unter dem Begriff "Schmutz" werden jegliche Partikel verstanden, die sich in dem Rauchweg anlagern bzw. ablagern. Insbesondere besteht der Schmutz aus Partikeln, die beim Rauchen durch die Wasserpfeife geleitet werden, also insbesondere Rauchpartikel und Bestandteile des Tabaks, insbesondere Molasse oder darin enthaltene Substanzen. Der Schmutz kann jedoch auch andere Partikel aufweisen, insbesondere im Bereich des Schlauches z. B. Speichel oder sonstige Flüssigkeit, die in feuchter Atemluft enthalten ist und beim Rauchen im Rauchweg bzw. Schlauch kondensiert.

Vorzugsweise ist die Beschichtung derart ausgebildet, dass ein Entfernen des Schmutzes bzw. eine Reinigung durch Spülen mit Wasser oder einer sonstigen Reinigungsflüssigkeit und/oder ohne die Zuhilfenahme mechanischer Reinigungsvorrichtungen wie z. B. Bürsten möglich ist. Auf diese Weise ist also eine schnelle, einfache und kostengünstige Reinigung ermöglicht.

Des Weiteren kann mittels der Beschichtung vorzugsweise die Lebens- bzw. Gebrauchsdauer der Wasserpfeife oder von Teilen der Wasserpfeife verlängert werden.

Ein Behälter, ein Schlauchanschluss, ein Schlauch und/oder ein Mundstück sind vorzugsweise Teil des Rauchwegs und/oder weisen vorzugsweise die Beschichtung auf.

Vorzugsweise weisen alle Teile oder Flächen der Wasserpfeife, die beim Rauchen mit dem Rauch und/oder Tabakbestandteilen, insbesondere Molasse, zumindest potentiell in Berührung kommen, die schmutzabweisende Beschichtung auf. Diese erleichtert die (vollständige) Reinigung der Wasserpfeife.

Die Rauchsäule, der Behälter, der Schlauchanschluss, der Schlauch und/oder das Mundstück haben die Beschichtung vorzugsweise innenseitig bzw. auf einer Seite oder Fläche, die beim Rauchen mit dem Rauch und/oder Bestandteilen des Tabaks, insbesondere Molasse, in Berührung kommt. Vorzugsweise sind die genannten Teile zumindest auf dieser Seite oder Fläche vollständig mit der Beschichtung versehen oder von der Beschichtung bedeckt.

Die Beschichtung weist vorzugsweise eine Dicke von mindestens 50 nm und/oder weniger als 300 nm auf. So sind die zur Herstellung und/oder zum Aufbringen der Beschichtung nötige Materialmenge und die entsprechenden Material- und Herstellungskosten minimiert. Zudem hat sich gezeigt, dass durch eine Beschichtung der angegebenen Dicke bereits die gewünschte Wirkung erzielt werden kann.

Vorzugsweise weist die Beschichtung Siliziumdioxid (SiO₂) bzw. Nanopartikel aus Siliziumdioxid auf oder besteht daraus. Es hat sich erwiesen, dass durch die Verwendung von Siliziumdioxid auf einfache Weise eine sehr wirkungsvolle schmutzabweisende Beschichtung realisiert werden kann.

Die Beschichtung ist vorzugsweise inert, lebensmittelecht und/oder hitzebeständig. Auf diese Weise kann eine langlebige und Hygienevorschriften genügende Beschichtung realisiert werden.

Vorzugsweise weisen verschiedene Teile oder Abschnitte der Wasserpfeife bzw. des Rauchwegs unterschiedliche Beschichtungen auf. Dies ist insbesondere dann notwendig und/oder vorteilhaft, wenn verschiedene Teile der Wasserpfeife bzw. des Rauchwegs aus unterschiedlichen Materialien bestehen oder hergestellt sind.

Gemäß einem weiteren Aspekt betrifft die vorliegende Erfindung die Verwendung einer Beschichtung auf einer Rauchsäule aus Edelstahl, die Teil eines Rauchwegs einer Wasserpfeife zum Rauchen von Tabak ist. Die Beschichtung weist Nanopartikel auf. Durch die Beschichtung basierend auf dem Lotoseffekt wird das Anhaften von Schmutz in dem Rauchweg vermieden oder verringert. Insbesondere wird durch die Beschichtung auf einfache Weise das Reinigen der Wasserpfeife erleichtert.

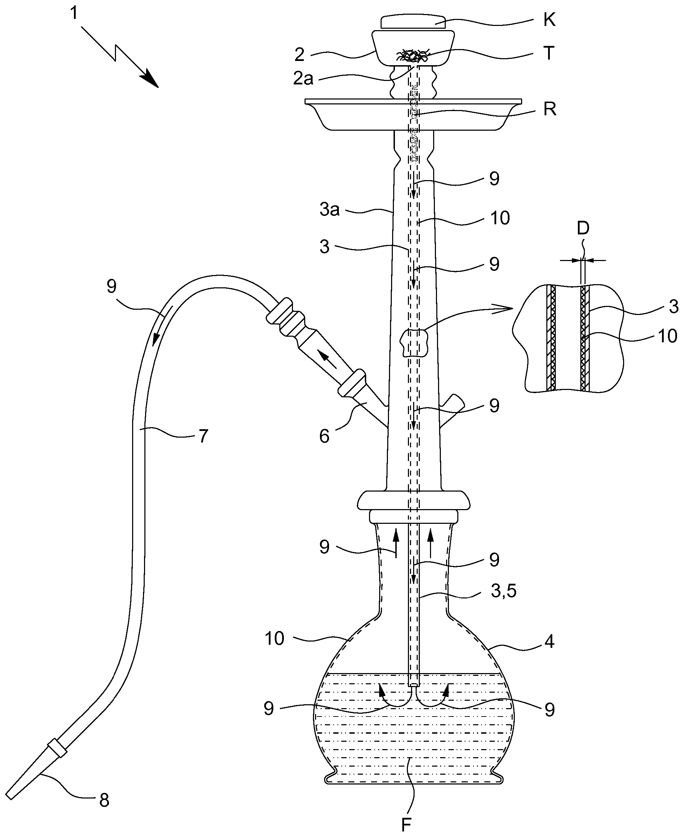

Weitere Aspekte, Merkmale, Eigenschaften und Vorteile der vorliegenden Erfindung ergeben sich aus den Ansprüchen und der folgenden Beschreibung einer bevorzugten Ausführungsform anhand der Zeichnung.

Die einzige Figur zeigt schematisch in einer Frontansicht eine bevorzugte Ausführungsform einer erfindungsgemäßen Wasserpfeife 1 zum Rauchen von Tabak T. Anstelle von Tabak T können auch andere Substanzen eingesetzt bzw. geraucht werden, beispielsweise Shiazosteine, Cannabis, Pasten oder Tee.

Die Wasserpfeife 1 weist einen Kopf 2 auf, in bzw. auf dem der Tabak T und/oder ein Kohlenstück K oder mehrere Kohlenstücke K zum Erhitzen des Tabaks T anordenbar sind. Das Kohlenstück K kann direkt auf dem Tabak T angeordnet oder, beispielsweise durch ein Sieb oder eine durchlöcherte Folie, insbesondere Aluminiumfolie, von dem Tabak T getrennt sein.

Der Kopf 2 ist über eine Rauchsäule 3 mit einem Behälter 4 zur Aufnahme einer Flüssigkeit F fluidisch verbunden.

Die Rauchsäule 3 ist in der Figur nur gestrichelt dargestellt, da sie innerhalb eines hier undurchsichtigen Oberteils 3a der Wasserpfeife 1 angeordnet ist.

Bei der dargestellten Ausführungsform der Wasserpfeife 1 verläuft die Rauchsäule 3 vertikal, mittig und/oder entlang einer Längsachse der Wasserpfeife 1. Hier sind jedoch auch andere Lösungen möglich.

Der Kopf 2 weist eine oder mehrere Durchbrechungen 2a auf, durch die beim Erhitzen des Tabaks T entstandener Rauch R vom Tabak T bzw. von einer Oberseite des Kopfes 2 in die Rauchsäule 3 gelangen kann.

Relative Orts- bzw. Positionsangaben wie "unten", "oben" o. dgl. beziehen sich jeweils auf die übliche Gebrauchslage der Wasserpfeife 1, bei der die Wasserpfeife 1 mit einer Längsachse vertikal ausgerichtet ist, wie es auch in der Figur dargestellt ist. Somit haben die Begriffe "oben", "unten" o. dgl. die übliche Bedeutung bezüglich einer vertikalen bzw. lotrechten Anordnung, wie insbesondere in der Figur dargestellt. "Oben" ist folglich vorzugsweise eine dem Erdmittelpunkt abgewandte Seite, während "unten" eine dem Erdmittelpunkt zugewandte, vorzugsweise quer oder senkrecht zur Gravitationskraft verlaufende Seite ist.

Die Rauchsäule 3 kann einteilig oder mehrteilig ausgebildet sein. Insbesondere ist es möglich, dass die Rauchsäule 3 ein Tauchrohr 5 aufweist. Vorzugsweise ist das Tauchrohr 5 an einem unteren Ende der Rauchsäule 3 angeordnet bzw. anordenbar und/oder von der Rauchsäule 3 abnehmbar. Das Tauchrohr 5 bildet vorzugsweise einen (abnehmbaren) Teil oder Abschnitt der Rauchsäule 3.

Die Rauchsäule 3 und/oder das Tauchrohr 5 sind vorzugsweise rohrartig, länglich und/oder (hohl-)zylindrisch ausgebildet.

Vorzugsweise ist die Rauchsäule 3 durch ein längliches, zylindrisches Rohr gebildet, das innerhalb des Oberteils 3a der Wasserpfeife 1 angeordnet oder anordenbar ist. Vorzugsweise sind die Rauchsäule 3 und das Oberteil 3a einstückig ausgebildet. Im allgemeinen Sprachgebrauch wird häufig nicht zwischen dem Oberteil 3a und der innenseitig des Oberteils 3a angeordneten Rauchsäule 3 unterschieden, so dass häufig auch das Oberteil 3a verallgemeinernd als Rauchsäule bezeichnet wird.

Vorzugsweise ist die Rauchsäule 3 bzw. das Tauchrohr 5 sowohl am oberen Ende als auch am unteren Ende offen.

Die Länge der Rauchsäule 3 kann stark variieren und beträgt beispielsweise zwischen 20 cm und 1,20 m. Es sind jedoch auch längere oder kürzere Rauchsäulen 3 möglich.

Der Innendurchmesser der Rauchsäule 3 und/oder des Tauchrohrs 5 beträgt vorzugsweise mehr als 5 mm und/oder weniger als 20 mm. Hier sind jedoch auch größere oder kleinere Durchmesser möglich.

Die Rauchsäule 3 und das Tauchrohr 5 können unterschiedliche Innendurchmesser aufweisen.

Erfindungsgemäß besteht die Rauchsäule 3 aus Edelstahl. Das Oberteil 3a und/oder das Tauchrohr 5 können beispielsweise Metall, insbesondere Edelstahl, Messing oder Aluminium, Kunststoff, insbesondere Acrylglas, oder Glas aufweisen oder daraus bestehen. Es sind jedoch auch andere Materialien möglich.

Der Behälter 4 bildet vorzugsweise eine Standfläche und/oder einen Standfuß der Wasserpfeife 1. Im Fachjargon wird der Behälter 4 häufig auch als "Bowl" bezeichnet.

Der Behälter 4 kann aus dem gleichen oder einem anderen Material wie das Oberteil 3a, die Rauchsäule 3 und/oder das Tauchrohr 5 bestehen oder hergestellt sein.

Vorzugsweise ist der Behälter 4 zur Aufnahme einer Flüssigkeit F, insbesondere Wasser, ausgebildet. Insbesondere wird bei der Benutzung der Wasserpfeife 1 der Behälter 4 so weit mit einer Flüssigkeit F gefüllt, dass das Tauchrohr 5 bzw. die Rauchsäule 3 in die Flüssigkeit F eingetaucht ist bzw. sich die Flüssigkeitsoberfläche oberhalb der unteren Öffnung des Tauchrohrs 5 bzw. der Rauchsäule 3 befindet.

Der Rauch R wird beim Rauchen bzw. Inhalieren somit vorzugsweise durch die Flüssigkeit F geleitet, bevor er in den Mundraum des Benutzers gelangt. Vorzugsweise wird der Rauch R dabei abgekühlt.

Anstelle von Wasser können auch andere Flüssigkeiten F verwendet werden, beispielsweise Softdrinks, Säfte, Eistee, Milch oder alkoholische Getränke bzw. Flüssigkeiten.

Dementsprechend beschränkt der Begriff "Wasserpfeife" Wasserpfeifen 1 der beschriebenen Art nicht auf die Verwendung mit Wasser als Flüssigkeit F, sondern umfasst auch solche Vorrichtungen zum Rauchen von Tabak T, bei denen eine andere Flüssigkeit als Wasser verwendet wird.

Die Wasserpfeife 1 weist vorzugsweise einen Auslass für den Rauch R auf, der bei der in der Figur dargestellten Ausführungsform der Wasserpfeife 1 als Schlauchanschluss 6 ausgebildet ist. Die Wasserpfeife 1 kann auch mehrere Auslässe bzw. Schlauchanschlüsse 6 aufweisen.

Der Schlauchanschluss 6 ist vorzugsweise am Oberteil 3a der Wasserpfeife 1 angeordnet. Er kann aber auch am Behälter 4 angeordnet sein.

Der Schlauchanschluss 6 ist mit dem Behälter 4 fluidisch verbunden, so dass der Rauch R, der beim Rauchen aus der Rauchsäule 3 bzw. dem Tauchrohr 5 austritt und in bzw. durch die Flüssigkeit F und/oder den Behälter 4 geleitet wird, durch den Schlauchanschluss 6 weitergeleitet werden kann.

Vorzugsweise weist die Wasserpfeife 1 einen Schlauch 7 mit einem Mundstück 8 auf, wobei der Schlauch 7 an den Schlauchanschluss 6 bzw. Auslass angeschlossen oder anschließbar ist. Vorzugsweise ist der Schlauch 7 von dem Schlauchanschluss 6 abnehmbar.

Zum Rauchen bzw. Inhalieren nimmt ein (nicht dargestellter) Benutzer das Mundstück 8 in den Mund und saugt an diesem, so dass Luft von der Oberseite des Kopfes 2 angesogen wird. Zwischen dem Kopf 2 und dem Auslass bzw. Schlauchanschluss 6, dem Schlauch 7 und/oder dem Mundstück 8 besteht eine durchgehende fluidische Verbindung, so dass der Rauch R, der durch das Erhitzen des Kohlenstücks K beim Saugen an dem Mundstück 8 erzeugt wird, von dem Kopf 2 durch den Behälter 4 bzw. die Flüssigkeit F in den Mundraum des Benutzers gelangen kann.

Die dargestellte Ausführungsform der Wasserpfeife 1 wird auch als Shisha bezeichnet. Gemäß einer weiteren, nicht dargestellten Ausführungsform kann die Wasserpfeife 1 jedoch auch als sogenannte Bong ausgebildet sein. Eine Bong unterscheidet sich von einer Shisha im Wesentlichen durch die zwei folgenden Merkmale: zum einen wird zum Rauchen bzw. Inhalieren bei einer Bong der Mund direkt am Auslass für den Rauch angesetzt, wobei dieser Auslass dementsprechend vorzugsweise auch nicht als Schlauchanschluss 6 ausgebildet ist. Dementsprechend weist eine Bong üblicherweise auch keinen Schlauch 7 und kein Mundstück 8 auf. Zum anderen ist im Gegensatz zur dargestellten Ausführungsform der Shisha bei einer Bong die Rauchsäule 3 üblicherweise schräg anstatt vertikal und zumeist auch unmittelbar am Behälter 4 angeordnet.

Das Prinzip bzw. die Funktionsweise, dass der Rauch R zunächst durch eine Flüssigkeit F geleitet wird und dann erst eingeatmet bzw. inhaliert wird, ist jedoch bei einer Shisha und einer Bong identisch.

Insbesondere betrifft die vorliegende Erfindung sowohl Wasserpfeifen 1, die als Shisha ausgebildet sind, als auch solche, die als Bong ausgebildet sind.

Der Rauch R wird beim Rauchen entlang eines Rauchweges 9 durch die Wasserpfeife 1 geleitet. Vorzugsweise erstreckt sich der Rauchweg 9 vom Kopf 2 bis zum Auslass bzw. Schlauchanschluss 6. Bei einer als Shisha ausgebildeten Wasserpfeife 1 erstreckt sich der Rauchweg 9 auch (weiter) durch den Schlauch 7 bis zum Mundstück 8.

Der Rauchweg 9 bildet oder ist vorzugsweise eine durchgängige und/oder ununterbrochene fluidische Verbindung zwischen dem Kopf 2 und dem Auslass bzw. Schlauanschluss 6, Schlauch 7 und/oder Mundstück 8.

Insbesondere wird bei der vorliegenden Erfindung unter dem Begriff "Rauchweg" das Teil oder der Abschnitt bzw. die Teile oder die Abschnitte der Wasserpfeife 1 verstanden, durch die und/oder an denen vorbei der Rauch R hergeleitet wird und/oder die beim Rauchen mit dem Rauch R zumindest potenziell in Berührung kommen. In diesem Sinne wird der Begriff "Rauchweg" also nicht nur rein abstrakt als Weg, den der Rauch R durch die Wasserpfeife 1 nimmt, verstanden, sondern körperlich als Summe der Teile, die einen Weg für den Rauch R bilden bzw. festlegen oder begrenzen.

Die Rauchsäule 3 ist Teil des Rauchwegs 9. Darüber hinaus sind oder bilden insbesondere der Kopf 2, die Durchbrechung(en) 2a, das Tauchrohr 5, der Behälter 4, der Auslass bzw. Schlauchanschluss 6, der Schlauch 7 und/oder das Mundstück 8 Teile oder Abschnitte des Rauchwegs 9 oder bilden diesen.

Erfindungsgemäß weist die Rauchsäule 3 als Teil des Rauchwegs 9 der Wasserpfeife 1 zumindest abschnittsweise eine Beschichtung 10 auf.

Die Beschichtung 10 ist als schmutzabweisende Beschichtung und Anti-Haft-Beschichtung ausgebildet.

In der Figur ist die Beschichtung 10 nur schematisch durch eine gestrichelte Linie dargestellt.

Vorzugsweise weist der Rauchweg 9 vollständig die Beschichtung 10 auf bzw. ist der Rauchweg 9 vollständig mit der Beschichtung 10 versehen oder beschichtet.

Insbesondere reduziert die Beschichtung 10 den Verschmutzungsgrad des Rauchwegs 9 durch (beim Rauchen) an der Rauchsäule 3 und/oder dem Tauchrohr 5 herunterlaufende Molasse oder andere Bestandteile des Tabaks T.

Vorzugsweise weisen das Oberteil 3a, das Tauchrohr 5, der Behälter 4, der Schlauchanschluss 6, der Schlauch 7 und/oder das Mundstück 8 - jeweils zumindest abschnittsweise und/oder innenseitig - die Beschichtung 10 auf. Es kann auch zusätzlich eine außenseitige Beschichtung 10 vorgesehen sein.

Vorzugsweise bildet die Beschichtung 10 eine Versiegelung des Rauchwegs 9 bzw. der Oberfläche des Rauchwegs 9.

Die Beschichtung 10 weist Nanopartikel auf. Als Nanopartikel werden dabei insbesondere Teilchen oder Partikel verstanden, deren Größe oder größte Erstreckung zwischen 1 nm und 100 nm liegt.

Eine "Nanobeschichtung" ist insbesondere eine Beschichtung, die eine nanostrukturierte Oberfläche bildet oder aufweist, also eine Oberfläche mit einer geordneten oder regelmäßigen Struktur auf einer Größenskala von etwa 1 nm bis 100 nm.

Die Beschichtung 10 weist vorzugsweise eine Dicke D von mindestens 50 nm, bevorzugt mindestens 100 nm, insbesondere mindestens 150 nm, und/oder höchstens 300 nm, bevorzugt höchstens 250 nm, insbesondere höchstens 200 nm, auf.

In dem vergrößerten Ausschnitt der Figur ist die Beschichtung 10 nicht maßstäblich, sondern zur Verdeutlichung übertrieben dick dargestellt.

Vorzugsweise weist die Beschichtung 10 Siliziumdioxid (SiO₂) auf oder besteht daraus. Insbesondere weist die Beschichtung 10 Nanopartikel aus Siliziumdioxid auf und/oder bilden Nanopartikel aus Siliziumdioxid einen wesentlichen Bestandteil der Beschichtung 10.

Die schmutzabweisende Wirkung bzw. Antihaftwirkung der Beschichtung 10 basiert auf dem Lotoseffekt.

Insbesondere wird also die Benetzbarkeit der Oberfläche durch die Beschichtung 10 verringert und/oder sind durch die Beschichtung 10 die zwischen einer die Beschichtung 10 aufweisenden Oberfläche und darauf angeordnetem Schmutz wirkenden Adhäsionskräfte verringert.

Vorzugsweise ist die Beschichtung 10 hydrophob und/oder lipophob bzw. oleophob.

Auf der Beschichtung 10 angelagerter bzw. anhaftender Schmutz ist vorzugsweise mit Wasser oder einer sonstigen Reinigungsflüssigkeit entfernbar oder abspülbar. Insbesondere ist also eine Reinigung der die Beschichtung 10 aufweisenden Teile oder Flächen durch Spülen oder Abwaschen mit (klarem) Wasser möglich. Vorzugsweise sind also aufgrund der Beschichtung 10 mechanische Reinigungsvorrichtungen wie Bürsten oder andere, insbesondere chemische, Reinigungsmittel zum Entfernen des Schmutzes bzw. zum Reinigen nicht erforderlich.

Die Beschichtung 10 ist vorzugsweise für das menschliche Auge unsichtbar.

Vorzugsweise ist die Beschichtung 10 UV-stabil und/oder weist die Beschichtung 10 einen geringen abrasiven Verschleiß auf. Mit anderen Worten kann die Beschichtung 10 also nur schwer entfernt bzw. abgerieben werden. Dies ist einer langen Lebensdauer der Wasserpfeife 1 bzw. der die Beschichtung 10 aufweisenden Teile zuträglich.

Die Beschichtung 10 ist vorzugsweise inert, lebensmittelecht und/oder hitzebeständig. Insbesondere genügen die Beschichtung 10 bzw. die Wasserpfeife 1 oder Teile davon, insbesondere die Rauchsäule 3, den Vorschriften der Verordnung (EG) 1935/2004.

"Hitzebeständig" bedeutet dabei insbesondere eine Beständigkeit der Beschichtung 10 bei Temperaturen von mehr als 100 °C, bevorzugt mehr als 200 °C, insbesondere mehr als 300 °C.

Vorzugsweise ist die Beschichtung 10 ebenfalls beständig gegenüber häufig und/oder stark wechselnden Temperaturen.

Optional weisen verschiedene Teile oder Abschnitte der Wasserpfeife 1 und/oder des Rauchwegs 9 unterschiedliche Beschichtungen 10 auf. Dies ist insbesondere dann notwendig und/oder vorteilhaft, wenn verschiedene Teile bzw. deren Oberflächen aus unterschiedlichen Materialien bestehen.

Insbesondere können sich die Beschichtungen 10 verschiedener Teile oder Abschnitte in ihrer physikalischen und/oder chemischen Zusammensetzung, in ihrer Dicke, in ihrer Oberflächenstruktur und/oder in weiteren Eigenschaften unterscheiden.

Insbesondere kann es notwendig oder vorteilhaft sein, verschiedene Teile, die aus unterschiedlichen Materialien bestehen, mit unterschiedlichen Beschichtungen 10 zu versehen. Beispielsweise kann die aus Edelstahl bestehende Rauchsäule 3 eine andere Beschichtung 10 aufweisen als ein aus Kunststoff bestehender Behälter 4.

### Bezugszeichenliste:

- 1: Wasserpfeife
- 2: Kopf
- 2a: Durchbrechung
- 3: Rauchsäule
- 3a: Oberteil
- 4: Behälter
- 5: Tauchrohr
- 6: Schlauchanschluss
- 7: Schlauch
- 8: Mundstück
- 9: Rauchweg
- 10: Beschichtung

- D: Dicke der Beschichtung
- F: Flüssigkeit
- K: Kohlenstück
- R: Rauch
- T: Tabak

## Patentansprüche

1. Wasserpfeife (1) zum Rauchen von Tabak (T), mit einer Rauchsäule (3) als Teil eines Rauchwegs (9) der Wasserpfeife (1), **dadurch gekennzeichnet, dass** die Rauchsäule (3) aus Edelstahl besteht und zumindest abschnittsweise eine schmutzabweisende Beschichtung (10) mit Nanopartikeln und mit einer auf dem Lotoseffekt basierenden Antihaftwirkung aufweist.

2. Wasserpfeife nach Anspruch 1, **dadurch gekennzeichnet, dass** die Beschichtung (10) einen geringen abrasiven Verschleiß aufweist.

3. Wasserpfeife nach Anspruch 1 oder 2, **dadurch gekennzeichnet, dass** die Beschichtung (10) hitzebeständig ist.

4. Wasserpfeife nach einem der voranstehenden Ansprüche, wobei die Wasserpfeife (1) einen Kopf (2) und einen Behälter (4) aus Glas zur Aufnahme einer Flüssigkeit (F) aufweist und der Kopf (2) über die Rauchsäule (3) mit dem Behälter (4) fluidisch verbunden ist, **dadurch gekennzeichnet, dass** der Behälter (4) zumindest abschnittsweise eine schmutzabweisende Beschichtung (10) mit einer auf dem Lotoseffekt basierenden Antihaftwirkung aufweist.

5. Wasserpfeife nach Anspruch 4, **dadurch gekennzeichnet, dass** sich die Beschichtung (10) der Rauchsäule (3) einerseits und die Beschichtung des Behälters (4) andererseits in ihrer physikalischen und/oder chemischen Zusammensetzung, in ihrer Dicke und/oder in ihrer Oberflächenstruktur unterscheiden.

6. Rauchsäule (3) für eine Wasserpfeife (1) zum Rauchen von Tabak (T), **dadurch gekennzeichnet, dass** die Rauchsäule (3) aus Edelstahl besteht und innenseitig eine schmutzabweisende Beschichtung (10) mit Nanopartikeln und mit einer auf dem Lotoseffekt basierenden Antihaftwirkung aufweist.

7. Rauchsäule nach Anspruch 6, **dadurch gekennzeichnet, dass** die Beschichtung (10) hitzebeständig ist.

8. Verwendung einer Beschichtung (10) auf einer Rauchsäule (3) die Teil eines Rauchwegs (9) einer Wasserpfeife (1) zum Rauchen von Tabak (T) ist, **dadurch gekennzeichnet, dass** die Rauchsäule (3) aus Edelstahl ist und dass die Beschichtung (10) Nanopartikel aufweist und durch die Beschichtung (10) basierend auf dem Lotoseffekt das Anhaften von Schmutz in dem Rauchweg (9) vermieden oder verringert wird.

9. Verwendung nach Anspruch 8, **dadurch gekennzeichnet, dass** die Beschichtung (10) hitzebeständig ist.

## Claims

1. Hookah (1) for smoking tobacco (T), having a smoke column (3) as part of a smoke path (9) of the hookah (1), **characterized in that** the smoke column (3) consists of high-grade steel and, at least sectionally, has a dirt-repellent coating (10) with nanoparticles and with an anti-adhesion effect based on the lotus effect.

2. Hookah according to claim 1, **characterized in that** the coating (10) has low abrasive wear.

3. Hookah according to claim 1 or 2, **characterized in that** the coating (10) is heat-resistant.

4. Hookah according to one of the preceding claims, wherein the hookah (1) has a head (2) and a container (4) composed of glass for holding a liquid (F), and the head (2) is fluidically connected to the container (4) via the smoke column (3), **characterized in that** the container (4), at least sectionally, has a dirt-repellent coating (10) with an anti-adhesion effect based on the lotus effect.

5. Hookah according to claim 4, **characterized in that** the coating (10) of the smoke column (3), on the one hand, and the coating of the container (4), on the other hand, differ in their physical and/or chemical composition, in their thickness and/or in their surface structure.

6. Smoke column (3) for a hookah (1) for smoking tobacco (T), **characterized in that** the smoke column (3) consists of high-grade steel and has on the inner surface a dirt-repellent coating (10) with nanoparticles and with an anti-adhesion effect based on the lotus effect.

7. Smoke column according to claim 6, **characterized in that** the coating (10) is heat-resistant.

8. Use of a coating (10) on a smoke column (3) which is part of a smoke path (9) of a hookah (1) for smoking tobacco (T), **characterized in that** the smoke column (3) is composed of high-grade steel and **in that** the coating (10) has nanoparticles and the adhesion of dirt in the smoke path (9) is avoided or reduced by the coating (10) based on the lotus effect.

9. Use according to claim 8, **characterized in that** the coating (10) is heat-resistant.

## Revendications

1. Narguilé (1) destinée à fumer du tabac (T), le narguilé comprenant une colonne de fumée (3) faisant partie d'un conduit de fumée (9) du narguilé (1), **caractérisée en ce que** la colonne de fumée (3) est en acier inoxydable et comporte au moins en partie un revêtement antisalissure (10) pourvu de nanoparticules et ayant un effet antiadhésif reposant sur l'effet lotus.

2. Narguilé selon la revendication 1, **caractérisée en ce que** le revêtement (10) présente une faible usure par abrasion.

3. Narguilé selon la revendication 1 ou 2, **caractérisée en ce que** le revêtement (10) est résistant à la chaleur.

4. Narguilé selon l'une des revendications précédentes, le narguilé (1) comportant une tête (2) et un récipient (4) en verre destiné à recevoir un liquide (F) et la tête (2) étant reliée fluidiquement au récipient (4) par le biais de la colonne de fumée (3), **caractérisée en ce que** le récipient (4) comporte au moins en partie un revêtement antisalissure (10) ayant un effet antiadhésif reposant sur l'effet lotus.

5. Narguilé selon la revendication 4, **caractérisée en ce que** le revêtement (10) de la colonne de fumée (3) d'une part et le revêtement du récipient (4) d'autre part diffèrent quant à leur composition physique et/ou chimique, leur épaisseur et/ou leur structure de surface.

6. Colonne de fumée (3) destinée à un narguilé (1) pour fumer du tabac (T), **caractérisée en ce que** la colonne de fumée (3) est en acier inoxydable et comporte du côté intérieur un revêtement antisalissure (10) pourvu de nanoparticules et ayant un effet antiadhésif reposant sur l'effet lotus.

7. Colonne de fumée selon la revendication 6, **caractérisée en ce que** le revêtement (10) est résistant à la chaleur.

8. Utilisation d'un revêtement (10) sur une colonne de fumée (3) faisant partie d'un conduit de fumée (9) d'un narguilé (1) pour fumer du tabac (T), **caractérisée en ce que** la colonne de fumée (3) est en acier inoxydable et **en ce que** le revêtement (10) comporte des nanoparticules et, l'adhérence de salissure dans le conduit de fumée (9) est évitée ou réduite par le biais d'un revêtement (10) reposant sur l'effet lotus.

9. Utilisation selon la revendication 8, **caractérisée en ce que** le revêtement (10) est résistant à la chaleur.
